## Europäisches Patentamt

## European Patent Office

## Office européen des brevets

(11) Numéro de publication: **0 196 951**
**B1**

# FASCICULE DE BREVET EUROPEEN

(45) Date de publication du fascicule du brevet:
24.05.89

(51) Int. Cl.⁴: **B29C 43/16**
// B29K59:00, B29L15:00

(21) Numéro de dépôt: 86400515.2

(22) Date de dépôt: 11.03.86

(54) Procédé pour le forgeage en matrice fermée de pièces en polyoxyméthylène et en polyamide.

(30) Priorité: 12.03.85 FR 8503589

(43) Date de publication de la demande:
08.10.86 Bulletin 86/41

(45) Mention de la délivrance du brevet:
24.05.89 Bulletin 89/21

(84) Etats contractants désignés:
AT BE CH DE GB IT LI LU NL

(56) Documents cités:
GB-A- 1 292 593
US-A- 3 733 383
US-A- 3 825 648
US-A- 4 014 965

MODERN PLASTICS ENCYCLOPEDIA,
vol. 50, no. 10A, 1973-1974, page 412; K.M. KULKARNI et
al.: "Forging and solid phase forming"
KUNSTSTOFFE,
vol. 73, no. 10, octobre 1983, pages 606-607, Munich, DE;
B.J. JUNGNICKEL: "Festphasen-Umformung - eine
neue Technologie in der Kunststoff-Verarbeitung"
S.T.Z. SCHWEIZERISCHE TECHNISCHE ZEITSCHRIFT,
vol. 68, no. 50, 16 décembre 1971, pages 1017-1023, Wabern, CH; D. ULRICH: "Das Verformen von Kunststoffen
im festen Zustand" MACHINE DESIGN,
vol. 45, no. 11, 3 mai 1973, pages 94-99, Chicago, US;
K.M. KULKARNI: "Finally, forged plastic parts"

(73) Titulaire: **ASSOCIATION POUR LA RECHERCHE ET LE
DEVELOPPEMENT DES METHODES ET PROCESSUS
INDUSTRIELS (ARMINES), 60, Boulevard Saint-Michel,
F-75272 Paris Cédex 06(FR)**

(72) Inventeur: **Deneuville, Patrick, 8, rue des Grillons Les
Lucioles, F-06130 Grasse(FR)**
Inventeur: **Haudin, Jean-Marc, Résidence Turquoise
Route de St. Jean, F-06600 Antibes(FR)**

(74) Mandataire: **Chevallier, Robert Marie Georges et al,
Cabinet BOETTCHER 23, rue La Boétie,
F-75008 Paris(FR)**

ACTORUM AG

**Description**

L'invention a pour objet un procédé selon le préambule de la revendication 1 pour le forgeage en matrice fermée de pièces diverses, susceptibles d'avoir des formes complexes, à partir de lopins en matière plastque semi-cristalline, plus particulièrement en homopolymère et en copolymère de polyoxyméthylène, et en polyamides 6 et 66 ainsi que 11 et 12.

Par polyoxyméthylène on entend au sens de l'invention, d'une part les résines polyoxydes homopolymères de formule $(CH_2O)_n$, d'autre part les copolymères séquencés. On entend particulièrement les polyoxyméthylènes qui présentent de bonnes propriétés mécaniques et qui possèdent un haut poids moléculaire, de même que les mélanges de ces polymères avec des charges minérales (verre par exemple).

Par polyamide 66 on entend, au sens de l'invention, le polymère ayant pour formule $CO-(CH_2)_4-CO-NH-(CH_2)_6-NH$, de haute masse moléculaire; par polyamide 6 le polymère linéaire de formule $CO-(CH_2)_5 NH$ ; par polyamides 11 et 12 respectivement ceux de formules $NH-(CH_2)_{10}CO$ et $NH-(CH_2)_{11}CO$.

Par forgeage en matrice il faut comprendre le procédé tel que décrit dans la publication Society of Plastics Engineers 26th Annual Technical Conference, New-York, May 1968, page 227, avec l'emploi par exemple d'une presse hydraulique.

Le forgeage des matières plastiques en matrice fermée apporte par rapport au moulage par injection des avantages appréciables bien connus, principalement l'amélioration des propriétés mécaniques des pièces finies et la réduction de la durée des cycles de fabrication, surtout pour les grandes pièces. Mais le forgeage des pièces en matière plastique se heurte à une propriété de ces dernières qui est le retour élastique; on désigne ainsi le retour partiel vers des dimensions initiales d'une pièce après sa compression. Cette reprise se fait souvent en deux temps : un retour immédiat suivi d'un retour lent avec l'écoulement du temps.

Il a été constaté que ce phénomène est différent selon les matières plastiques et que les mesures à prendre pour le supprimer sont diverses selon les matières forgées. Pour cette raison, il n'a pas été établi de méthode générale applicable à toutes les matières plastiques avec de simples adaptations en fonction de leur nature précise.

L'état de la technique met bien en évidence cette situation.

Par exemple, le forgeage du polypropylène et du polyéthylène tel qu'il est indiqué dans les publications : Machine Design du 3 Mai 1973 (p. 94 à 99) ; Plastics and Polymers Vol. 38 April 1970 (p. 124 à 130) ; Society of Plastics Engineers 26th Annual Technical Conference, New-York, May 1968 (p. 225 à 230), consiste à chauffer un lopin de matière thermoplastique à quelques degrés centigrades en dessous de son point de fusion et à le comprimer dans une matrice pendant 15 à 60 secondes à une pression choisie entre 70 et 775 bars.

Le brevet américain n° 4 324 756 décrit un procédé pour le forgeage du polybutène-1 selon lequel on chauffe un lopin à une température de 20° à 90°C et on le comprime dans une matrice pendant 1 à 40 secondes à une pression choisie entre 800 et 10.000 bars.

Le brevet américain n° 3 825 648 décrit un procédé pour le forgeage de matière plastique cristallisée, rigide, notamment de la famille de l'acétal ; ce procédé prévoit le chauffage d'un lopin à une température inférieure de 16°C environ à 3°C environ à la température de fusion de la matière, le chauffage préalable de la matrice à une température comprise entre la température de chauffage du lopin et une valeur inférieure de 42°C environ à cette dernière, la fermeture de la matrice dans laquelle a été introduit le lopin à une vitesse contrôlée comprise entre 1,3 et 25 cm par minute sans dépasser une valeur critique qui dépend d'un facteur de complexité de la pièce à obtenir, le maintien de la compression de la matière dans la matrice fermée pendant 5 à 60 secondes. La pression n'a pas une valeur critique indiquée ; elle est comprise entre 140 et 535 bars.

Selon ce procédé, il est nécessaire de ne pas dépasser une vitesse limitée de fermeture de la matrice ; cela se traduit par un cycle de fabrication de durée relativement élevée. En effet, la régulation de la vitesse est déterminée en vue d'un bon remplissage de la matrice, au détriment de la durée de maintien à l'état fermé.

On remarquera, en comparant les conditions de mise en oeuvre des trois procédés résumés ci-dessus, qu'ils sont très différents les uns des autres et que l'un quelconque d'entre eux ne peut pas se déduire des autres. Il est même important de noter que les critères retenus ne sont pas les mêmes dans les trois cas. Selon les deux premiers procédés la température de la matrice n'est pas considérée alors qu' elle est fixée assez précisément dans le troisième procédé ; en outre, celui-ci impose une vitesse de fermeture de la matrice et de compression de la matière alors que les deux premiers procédés ne mentionnent pas l'importance de cette vitesse ; cette condition est particulièrement contraignante pour l'utilisateur du procédé. Un rôle critique ou particulier de la pression de maintien de la matrice à l'état fermé n'est pas mentionné ni revendiqué.

Le troisième procédé du brevet américain numéro 3 825 648 comporte une limitation supplémentaire importante: il convient particulièrement au forgeage des pièces qui ont un volume supérieur à 50 cm3 environ.

Le but principal de l'invention est de parvenir à un procédé de forgeage en matrice fermée de pièces en matière plastique semi-cristalline, particulièrement en polyoxyméthylène homopolymère et copolymère ou en polyamides 6,66, 11 et 12 ne comportant pas de critère contraignant relatif à la vitesse de fermeture du moule et à la vitesse de compression de la matière applicable à des pièces dont le volume est plus faible que 50 cm3 et compris de préférence entre 10 cm3 environ et 32 cm3 environ. Autrement dit, le but principal de l'invention est de s'affranchir de toute régulation contraignante de la vitesse de fermeture, et donc d'augmenter la cadence de production tout en parvenant à un bon remplissage du moule même en cas de pièces contournées et de réalisation difficile comme les dentures d'un engrenage.

Un but secondaire de l'invention est de parvenir à un procédé tel que mentionné ci-dessus autorisant une vitesse de forgeage, c'est-à-dire une vitesse de fermeture du moule et de compression de la matière, relativement grande, pouvant avoir une valeur constante choisie entre 5 cm/mn et 2 m/mn selon la complexité des pièces à obtenir.

Selon le procédé de l'invention, pour donner à un lopin d'une matière plastique définie ci-dessus la forme finale désirée en comprimant ce lopin dans une matrice fermée, on chauffe de manière homogène ce lopin à une température comprise entre une valeur inférieure de 7°C environ à la température de fusion de la matière, on l'introduit dans la matrice, on ferme celle-ci et on comprime la matière à une pression de maintien comprise entre 3 fois et 20 fois la contrainte d'écoulement de la matière mesurée en traction à la température du laboratoire d'essai. On maintient cette pression pendant une durée qui doit être comprise entre 1 seconde et 60 secondes après la fin de la course de fermeture de la matrice, généralement pendant une durée de 1 à 20 s.

Pour ce qui est de la première condition imposée par le procédé de l'invention, la température de fusion Tf est définie comme étant l'abscisse du sommet du thermogramme de fusion : puissance calorifique en fonction de la température. Il convient de porter le lopin à une température aussi proche que possible de la température Tf-7°C. En effet, si l'on veut un remplissage correct d'une denture ou s'il y a filage complet de la matière, une température trop faible donne de mauvais résultats. Le polymère peut être chauffé préalablement par un quelconque moyen de chauffage, par exemple, un four muni d'un contrôle de température, un bain d'huile, un appareil de chauffage à haute fréquence (pertes diélectriques) La matière traitée reste constamment à l'état solide.

Pour la seconde condition imposée relative à la pression, celle-ci doit dépasser très largement la contrainte d'écoulement de la matière mesurée en traction à la température du laboratoire, c'est-à-dire de trois fois à vingt fois cette valeur, soit de 100 MPa à 700 MPa (1000 à 7000 bars) pour les polyoxyméthylènes et de 60 à 500 MPa (600 à 5000 bars) pour les polyamides. Plus la pression est élevée, plus le temps de maintien peut être court, et plus le retrait élastique diminue.

La vitesse de fermeture de la matrice et de la compression de la matière n'a pas une valeur critique imposée par l'invention. Mais il est compréhensible qu'une vitesse trop faible allonge la durée du cycle de forgeage et laisse à la matière une possibilité de refroidissement qui est néfaste à sa mise en forme. A l'opposé, il a été constaté qu'une vitesse trop élevée a un effet nuisible sur la forme des pièces et sur la tenue de la matière. Il est donc préférable de choisir une vitesse comprise entre 5 cm/mn et 2 m/mn et particulièrement entre 5 cm/mn et 1 m/mn la valeur retenue étant d'autant plus forte que la forme de la pièce est plus simple. Un avantage important du procédé de l'invention découle de ce qu'il n'est pas nécessaire de réguler la vitesse de fermeture de la matrice. Cette vitesse peut être constante pendant toute la durée de la fermeture et de la compression de la matière.

Il n'est pas obligatoire selon le procédé de l'invention de se servir d'une matrice préalablement chauffée. Toutefois, il est clair que la matrice tend à refroidir le lopin chauffé que l'on y introduit. Pour la réalisation de pièces simples, avec une vitesse élevée de fermeture, le refroidissement du lopin par la matrice n'est pas assez important pour être gênant. Pour la réalisation de pièces complexes, il est grandement préférable d'éliminer tout risque de refroidissement du lopin et d'utiliser une matrice chauffée. La température de cette dernière doit être choisie entre 20°C et la température de forgeage du lopin, de préférence entre 100°C et la température de forgeage.

Le choix de cette température dépend de la complexité de la pièce et de l'épaisseur des différentes parties de la pièce qui viennent en contact avec la matrice. Si le métal de celle-ci est froid, le polymère, suivant l'épaisseur, se refroidit plus ou moins vite. Les mouvements sont freinés, l'élasticité augmente et des fissures apparaissent. Dans les cas les plus difficiles seulement, pour des pièces nécessitant un filage de la matière ou un remplissage -comme le demande une denture, la température de la matrice doit être maintenue entre la température du lopin et la température du lopin moins 5°C, pendant toute l'opération de forgeage.

Comme avec tous les procédés de forgeage des matières plastiques, le lopin doit avoir un élancent, c'est-à-dire un rapport entre la longueur dans l'axe de compression et la longueur perpendiculairement à cet axe, qui ne fait pas courir un risque de flambement pendant sa compression. Avec les matières concernées par l'invention, ce rapport doit être inférieur ou égal à 2, de préférence inférieur ou égal à 1,7. Cette condition est une donnée de base qui s'impose à tous les procédés et qui n'est pas particulière à l'invention; elle est évidente pour l'homme de l'art.

On donnera maintenant plusieurs exemples de réalisation de trois pièces représentées par les figures 1 à 7 dans lesquelles :

- la figure 1 est une vue en élévation d'un lopin cylindrique ayant un diamètre de 20,4 mm et une hauteur de 29,7 mm,

- la figure 2 est une vue en élévation d'un galet plat obtenu à partir du lopin de la figure 1,
- la figure 3 est une vue en élévation d'un lopin identique à celui de la figure 1,
- la figure 4 est une vue de dessus d'une roue dentée à 20 dents module 1,5 obtenue à partir du lopin de la figure 3, avec un diamètre extérieur de 33 mm et un diamètre primitif de la denture de 30 mm,
- la figure 5 est une vue en élévation d'un lopin cylindrique ayant un diamètre de 21 mm et une hauteur de 41,2 mm,
- la figure 6 est une vue en coupe par un plan passant par l'axe d'un godet obtenu à partir du lopin de la figure 5, avec un diamètre extérieur de 35 mm, un diamètre intérieur de 25 mm, une hauteur totale de 40 mm,
- la figure 7 est une vue en coupe par un plan passant par l'axe de la matrice et de son piston plongeur, avec un lopin chaud disposé dans la matrice.

Plusieurs essais ont été effectués, d'une part conformément aux conditions du procédé de l'invention, d'autre part en dehors de ces conditions, à titre comparatif.

Pour tous les essais on a utilisé une presse hydraulique à force réglable jusqu'à la valeur maximum de 500 tonnes (5MN) avec une vitesse de déplacement du poinçon constante à une valeur quelconque pouvant être choisie dans la gamme de 6 cm/mn à 2 m/mn.

Les lopins de départ ont été chauffés dans une étuve à chaleur pulsée. La température de fusion était déterminée par un essai au calorimètre à analyse enthalpique différentielle (AED), ce qui permet d'ajuster la température de forgeage.

Les matrices employées ont été réalisées en acier à forte résistance et traitées pour supporter de fortes pressions internes.

<u>Exemple 1</u> (non conforme à l'invention, à titre comparatif).

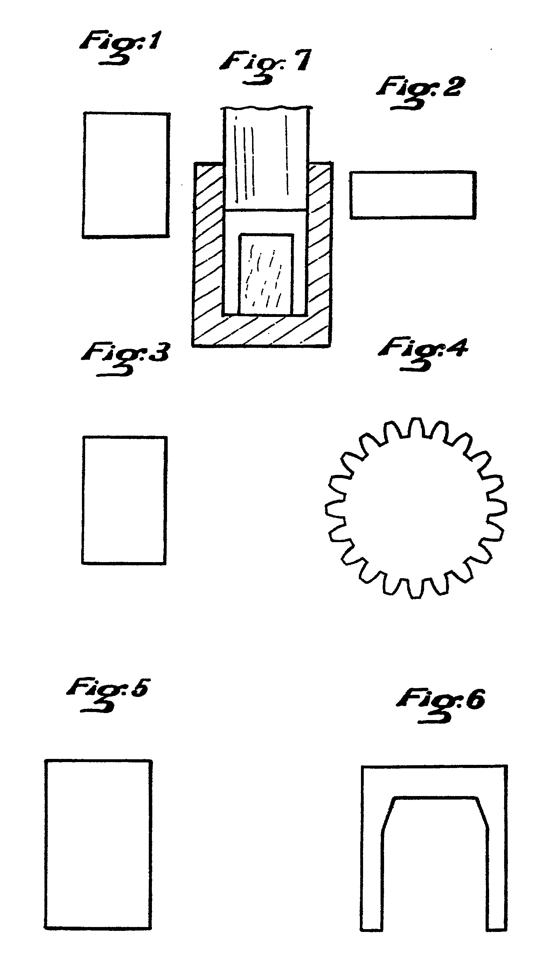

On a utilisé un lopin comme celui de la figure 1, respectivement en polyoxyméthylène et en polyamide, porté à différentes températures, indiquées sur les tableaux qui suivent, pour obtenir le galet plat de la figure 2. Le poinçon appliquait sur le polymère emprisonné dans la matrice une force de 10 t (10.000 daN) à une vitesse de 5 cm/mn et de 50 cm/mn. Le diamètre intérieur de la matrice était de 34 mm. Les résultats portés sur les tableaux 1A et 1B qui suivent mettent en évidence le rôle de la température de forgeage et du temps de maintien. Ils montrent aussi que même avec des conditions optimum pour ces deux paramètres, le retrait reste important. La matrice et le poinçon étaient froids et non lubrifiés. Le lopin était forcé d'occuper toute la section de la matrice sous une pression finale de 100 MPa (ou 1000 bars) qui a été maintenue dans certains cas pendant 30 s, dans d'autres cas pendant 0 s. A la fin de l'opération le galet forgé a été retiré de la matrice et on a mesuré ses dimensions aussitôt après. Ensuite, on a laissé le galet au repos pendant une semaine et on l'a mesuré à nouveau. On notera que le retrait est toujours important même à des températures relativement élevées.

Tableau no 1A

| Pplyoxyméthylène T$_{fusion}$ >160°C | | | | | |
|---|---|---|---|---|---|
| Température du lopin °C | Temps de maintien de la pression s | Mesures hauteur (mm) à la sortie de la matrice (matrice Ø 34 mm) | diamètre (mm) | Mesures hauteur (mm) 1 semaine plus tard | diamètre (mm) |
| 20 | 0 | 13 | 32,4 | 13,4 | 32 |
|  | 30 | 14,3 | 32 | 13,6 | 31,8 |
| 140 | 0 | 12,5 | 33 | 12,54 | 32,86 |
|  | 30 | 11,3 | 33,9 | 11,44 | 33,74 |
| 155 | 0 | 12,46 | 33,1 | 12,4 | 32,8 |
|  | 30 | 11,35 | 33,8 | 11,38 | 33,7 |

# EP 0 196 951 B1

### Tableau no 1B

| Pplyamide $T_{fusion} > 245°C$ | | | | | |
|---|---|---|---|---|---|
| Température du lopin °C | Temps de maintien de la pression s | Mesures hauteur (mm) à la sortie de la matrice (matrice Ø 34 mm) | diamètre (mm) | Mesures hauteur (mm) 1 semaine plus tard | diamètre |
| 20 | 15 | 16,3 | 31 | 16,4 | 30,9 |
| 100 | 15 | 14,6 | 31,72 | 15 | 31,6 |
| 140 | 15 | 14 | 32,4 | 14 | 32,4 |
| 210 | 15 | 12,9 | 33,2 | 12,96 | 33,14 |

Exemple II (non conforme à l'invention, à titre comparatif)

Avec le même équipement qu'à l'exemple I on a réalisé la roue dentée de la figure 4 à partir d'un lopin en polyoxyméthylène seulement. On a appliqué à ce lopin une force de 6,5 t (6.500 daN), ce qui correspond environ à une pression dans le matériau de 760 bars. Le forgeage a été fait à une température de 158 à 160°C suivant les essais. La matrice était chauffée à 100°C. La pression a été maintenue pendant 30 s après que le lopin ait été forcé d'occuper toute la cavité de la matrice. La vitesse de descente du poinçon était constante et très faible, comprise entre 1 et 5 cm/mn.

La pression dans le matériau était élevée mais cet exemple montre qu'elle n'a pas suffi à la réalisation de bonnes pièces.

Le tableau n° 2 qui suit résume les paramètres de forgeage et les résultats de trois essais principaux. Les conditions de forgeage sont celles préconisées par le brevet américain précité n° 3 825 648 pour le forgeage des polyacétals, notamment la pression de forgeage. Cet exemple met en évidence l'insuffisance des conditions préconisées dans ce brevet pour l'obtention de pièces complexes comme les roues dentées.

### Tableau no 2

| Essai no | Conditions valables pour les trois essais | Diamètre extérieur de la denture à la sortie de la matrice (mm) | Diamètre extérieur de la denture 1 semaine plus tard (mm) | Résultat Aspect des pièces |
|---|---|---|---|---|
| I | $Pm = 76\ MPa$ $T_{forgeage} = 158$ à $160°C$ | 30,6 | 30,30 | dents peu apparentes |
| II | matrice = 100 °C | 31 | 31 | rupture dans les dents |
| III | $T_{maintien} = 30\ s$ polyoxyméthylène | 30,8 | 30,6 | courbure des dents inexistante |

Exemple III (conforme à l'invention)

On a utilisé le même équipement que celui de l'Exemple I sauf que la matrice avait un diamètre intérieur de 35 mm. Elle était conçue pour que le piston appuie sur toute la surface de la matière emprisonnée (voir la figure 7). Avec cette disposition on a la certitude que si l'on augmente la force d'appui pendant le temps de maintien, c'est la pression hydrostatique donnée par la formule $P = F/S$ qui augmente à l'intérieur du matériau. Pour montrer que l'on peut s'affranchir grâce à cette pression de la condition relative à la vitesse de fermeture, les essais ont été faits à grande vitesse (50 cm/mn). De même, on a adopté des temps de maintien relativement faibles (3,10,15s) et une température de forgeage optimum, c'est-à-dire 155°C. Les résultats de cet essai montrent bien que le gain réalisé sur le retrait élastique et sur la netteté des pièces dépend de la pression. Le matériau employé était le polyoxyméthylène (homo et copolymères).

Les lopins de départ avaient une hauteur et un diamètre initiaux de h = 30 mm, Ø = 20,4 mm. Quand on mesure les dimensions finales, on ne doit pas oublier que le volume augmente globalement étant donné la dilatation. La valeur qui a donc un sens est le diamètre après forgeage comparé au diamètre de la matrice 35 mm. Les valeurs des hauteurs ont donc été volontairement négligées.

Tableau no 3

| Essai no | Force d'appui en T Pression en MPa | | Temps de maintien | Diamètre immédiatement après forgeage mm |
|---|---|---|---|---|
| I | $1,5^T$ | 15,25 | 10 s | 32,5 |
| II | $3^T$ | 30,6 | 10 s | 33,7 |
| III | $6^T$ | 61,2 | 10 s | 33,75 |
| IV | $8^T$ | 81,6 | 10 s | 33,84 |
| V | $9^T$ | 91,8 | 10 s | 34 |
| VI | $20^T$ | 205 | 10 s | 34,5 |
| VII | $2^T$ | 20,4 | 3 s | 32,5 |
| VIII | $4^T$ | 40,8 | 3 s | 33,1 |
| IX | $6^T$ | 61,2 | 3 s | 33,65 |
| X | $8^T$ | 81,6 | 3 s | 33,84 |
| XI | $2,5^T$ | 25,3 | 15 s | 33,8 |
| XII | $5,5^T$ | 55,5 | 15 s | 34,5 |
| XIII | $8^T$ | 81,6 | 15 s | 34,7 |

Exemple IV (conforme au procédé de l'invention)

On a utilisé le même équipement que pour les exemples précédents, mais avec une matrice en alliage d'aluminium AU4G, en plus de la matrice en acier traité. On a forgé des lopins en polyoxyméthylène homo et copolymère, ainsi que des lopins en polyamides comme celui de la figure 3 pour obtenir des roues dentées comme celle de la figure 4. Jusqu'au moment du forgeage, les lopins ont été tenus séparément à la température choisie (170°C pour homo et copolymère de polyoxyméthylène, 250°C pour le polyamide 66). Ils ont séjourné suffisamment dans l'étuve pour avoir une bonne homogénéité de température. La matière a été comprimée dans la matrice à des vitesses différentes mentionnées sur les tableaux qui suivent, à des pressions différentes, également indiquées. On a maintenu la pression à sa valeur maximum pendant un temps relativement court : 10 à 20 s. Les matrices ont été maintenues à une température de 120°C environ. On a mesuré le diamètre extérieur de la roue dentée à sa sortie de la matrice (valeur théorique 33 mm) et après l'avoir laissée au repos pendant une semaine. (Les mesures sont portées sur les tableaux 4A,4B,4C qui suivent). La configuration de la denture était bonne et régulière et correspondait bien à la courbe en développante de cercle recherchée. Les roues dentées engrenaient bien ensemble et tournaient régulièrement l'une avec l'autre.

Le troisième tableau (4C) met en évidence le rôle majeur de la pression sur l'aspect de la denture. Les mêmes conditions moyennes ont été imposées à un polyoxyméthylène mais avec une variation de la force finale de maintien. La température des lopins était de 170°C et celle de la matrice de 120°C, la vitesse était de 20 cm/mn sauf indication contraire et le temps de maintien de 15 s sauf indication contraire . Les résultats mettent bien en évidence le rôle de la pression sur le retrait élastique et sur l'aspect des pièces, notamment dans le remplissage des dents. Il en ressort que l'on peut avec le procédé de l'invention, travailler à des vitesses élevées et donc obtenir des pièces correctes à une bonne cadence de production.

Tableau no 4A

| | | | |
|---|---|---|---|
| Polyoxyméthylène $T_{fusion}$ = 176,3°C | | | |
| Température moyenne de forgeage : 170°C | | | |
| Essai no | Conditions | Diamètre extérieur de denture après 1 semaine (mm) | Aspect de la denture |
| I | Homopolymère; $T_{matrice}$ = 120°C – Pression = 200 MPa Vitesse: 20 cm/mn | 32,3 | Bon aspect général respec de la denture en développante de cercle |
| II | Homopolymère; $T_{matrice}$ = 140°C – Pression = 350 MPa Vitesse: 40 cm/mn | 32,5 | idem |
| III | Copolymère; $T_{matrice}$ = 120°C – Pression = 200 MPa Vitesse: 20 cm/mn | 32,45 | idem |

Tableau no 4B

| | | | |
|---|---|---|---|
| Polyamide 66 $T_{fusion}$ = 256,5°C | | | |
| Température moyenne de forgeage 245°C 250°C dans les deux cas | | | |
| Essai no | Conditions | Diamètre extérieur de denture après 1 semaine (mm) | Aspect de la denture |
| I | $T_{matrice}$ 120°C Pression = 300 MPa Vitesse: 20 cm/mn | 31,8 | Bon aspect général mêmes remarques que Tableau no 4A |
| II | $T_{matrice}$ 120°C Pression = 400 MPa Vitesse: 20 cm/mn | 32 | |

Tableau no 4C

| | | | | |
|---|---|---|---|---|
| Polyoxyméthylène | | | | |
| Essai no | Conditions | Pression MPa | Diamètre de la denture après 1 semaine (mm) | Aspect de la denture |
| I | Indiquées dans le texte | 80 | 29,8 | Denture apparente mais très mal profilée |
| II | idem | 130 | 31,6 | Meilleures dents – remplissage incomplet |
| III | idem | 200 | 32,3 | Bon aspect |
| IV | Temps maintien 30 s | 350 | 32,6 | idem |
| V | Vitesse 50 cm/mn | 350 | 32,5 | idem |

Ainsi qu'on l'a dit plus haut, le procédé de l'invention est applicable aux résines polyoxydes homopolymères et aux copolymères séquencés, aux polyamdes 6, 66 et 11, 12, ainsi qu'aux mélanges de ces quatre polyamides avec des charges minérales. Il est évident que les matériaux du même genre, c'est-à-dire proches des polyoxyméthylènes et des polyamides sont aussi susceptibles d'être traités par le procédé de l'invention. On entend par produits proches les polymères semi-cristallins qui ont au moins 40 % de cristallinité en masse, pour lesquels la phase amorphe ne fait pas intervenir une trop forte élasticité, ayant des propriétés rhéologiques analogues, souvent avec des masses moléculaires relativement élevées. On peut citer par exemple les polypropylènes pour lesquels la pression de maintien sous pression dans la matrice fermée est environ de 50 à 350 MPa (500 à 3500 bars) et les polyéthylènes basse et moyenne densité ou de bas poids moléculaires pour lesquels la pression de maintien est environ de 30 à 250 MPa (300 à 2500 bars).

**Revendications**

1. Procédé de fabrication par forgeage dans une matrice fermée de pièces à forme finale prédéterminée à partir d'un lopin en matière plastique semi-cristalline du genre polyoxyméthylène et polyamide, selon lequel on chauffe de manière homogène le lopin à une température inférieure de 7°C environ à la température de fusion de la matière, on introduit le lopin chaud dans la matrice ouverte, on ferme la matrice et on comprime la matière dans la matrice fermée à une pression de maintien déterminée, on maintient cette pression déterminée pendant une durée comprise entre 1 seconde et 60 secondes après la fermeture de la matrice, on ouvre la matrice et on en retire la pièce forgée, caractérisé en ce que ladite pression de maintien déterminée est comprise entre trois fois et vingt fois la contrainte d'écoulement de la matière mesurée en traction à la température du milieu ambiant.

2. Procédé de fabrication par forgeage dans une matrice fermée de pièces à forme finale prédéterminée à partir d'un lopin en matière plastique semi-cristalline du genre polyoxyméthylène et polyamide, selon lequel on chauffe de manière homogène le lopin à une température au plus égale à une valeur inférieure de 7°C environ à la température de fusion de la matière, on introduit le lopin chaud dans la matrice ouverte, on ferme la matrice et on comprime la matière dans la matrice fermée à une pression de maintien déterminée, on maintient cette pression déterminée pendant une durée comprise entre 1 seconde et 60 secondes après la fermeture de la matrice, on ouvre la matrice et on en retire la pièce forgée, caractérisé par les caractéristiques combinatoires suivantes:
   – la température de chauffe de lopin est comprise entre une valeur inférieure de 50°C à la température de fusion de la matière et ladite valeur inférieure de 7°C environ à cette température de fusion,
   – la pression de maintien déterminée est comprise entre 3 fois et 20 fois la contrainte d'écoulement de la matière mesurée en traction à la température du milieu ambiant.

3. Procédé selon l'une quelconque des revendications 1, 2, caractérisé en ce que la pression de maintien est comprise entre 10 à 20 fois la contrainte d'écoulement mesurée en traction à la température du milieu ambiant et elle est appliquée pendant une durée de 1 à 20 secondes.

4. Procédé selon l'une quelconque des revendications 1, 2, caractérisé en ce qu'on ferme la matrice et on comprime la matière jusqu'à la pression désirée à une vitesse comprise entre 5 cm/mn et 2 m/mn, de préférence entre 5 cm/mn et 1 m/mn.

5. Procédé selon la revendication 4, caractérisé en ce qu'on ferme la matrice et on comprime la matière à une valeur constante de la vitesse choisie.

6. Procédé selon l'une quelconque des revendications 1, 2, caractérisé en ce que pour des pièces de forme finale complexe, on chauffe la matrice à une température comprise entre 20°C et la température du lopin chauffé, avant d'introduire le lopin dans la matrice.

7. Procédé selon la revendication 6, caractérisé en ce qu'on chauffe la matrice à une température comprise entre 100°C et la température du lopin chauffé.

8. Procédé selon l'une quelconque des revendications 6, 7, caractérisé en ce qu'on maintient pendant la durée de l'opération de forgeage la matrice à la température à laquelle elle a été chauffée.

9. Procédé selon la revendication 8, caractérisé en ce qu'on chauffe la matrice à une température comprise entre la température du lopin et la température du lopin moins 5°C et on maintient la matrice à cette température pendant la durée du forgeage.

10. Procédé selon l'une quelconque des revendications 1, 2, caractérisé en ce qu'on utilise une pression comprise entre 1000 et 7000 bars pour les polyoxyméthylènes, homopolymères et copolymères, et entre 600 et 5000 bars pour les polyamides 6 et 66.

**Claims**

1. A process for the production by forging in a closed mould of components of predetermined final shape from a billet portion of semicrystalline plastics material of the polyoxymethylene and polyamide type, wherein the billet portion is homogenously heated at a temperature which is about 7°C lower than the melting temperature of the material, the hot billet portion is introduced into the mould in an open condition, the mould is closed and the material is compressed in the closed mould at a given holding pressure, said given pressure is held for a period of between 1 second and 60 seconds after closure of the mould, the mould is opened and the forged component is withdrawn therefrom, characterised in that said given holding pressure is between three times and twenty times the yield stress of the material as measured in a tensile mode at the temperature of the ambient medium.

2. A process for the production by forging in a closed mould of components of predetermined final shape from a billet portion of semicrystalline plastics material of the polyoxymethylene and polyamide type, wherein the billet portion is homogenously heated at a temperature which is at most equal to a value which is about 7°C below the melting temperature of the material, the hot billet portion is introduced into the mould in an open condition, the mould is closed and the material is compressed in the closed mould at a given holding pressure, said given pressure is held for a period of between 1 second and 60 seconds after closure of the mould, the mould is opened and the forged component is withdrawn therefrom, characterised by the following combinational features:
   – the billet portion heating temperature is between a value which is 50°C below the melting temperature

EP 0 196 951 B1

of the material and said value which is about 7°C below said melting temperature,
– the given holding pressure is between 3 times and 20 times the yield stress of the material as measured in the tensile mode at the temperature of the ambient medium.

3. A process according to either one of claims 1 and 2 characterised in that the holding pressure is between 10 and 20 times the yield stress as measured in the tensile mode at the temperature of the ambient medium and it is applied for a period of from 1 to 20 seconds.

4. A process according to either one of claims 1 and 2 characterised in that the mould is closed and the material is compressed to the desired pressure at a speed which is between 5 cm/min and 2 m/min, preferably between 5 cm/min and 1 m/min.

5. A process according to claim 4 characterised in that the mould is closed and the material is compressed at a constant value of the selected speed.

6. A process according to either one of claims 1 and 2 characterised in that, for components of complex final shape, the mould is heated at a temperature which is between 20°C and the temperature of the heated billet portion before the billet portion is introduced into the mould.

7. A process according to claim 6 characterised in that the mould is heated at a temperature which is between 100°C and the temperature of the heated billet portion.

8. A process according to either one of claims 6 and 7 characterised in that the mould is held at the temperature to which it was heated, for the duration of the forging operation.

9. A process according to claim 8 characterised in that the mould is heated at a temperature which is between the temperature of the billet portion and the temperature of the billet portion less 5°C and the mould is held at that temperature for the duration of the forging operation.

10. A process according to either one of claims 1 and 2 characterised by using a pressure which is between 1000 and 7000 bars for homopolymer and copolymer polyoxymethylenes and between 600 and 5000 bars for polyamides 6 and 66.

## Patentansprüche

1. Herstellungsverfahren durch Schmieden in geschlossener Form von Teilen vorgegebener Endausführung, ausgehend von einem Rohling aus halbkristallinem Kunststoff des Polyoxymethylen- und Polyamid-Typs, gemäß welchem man den Rohling auf homogene Weise auf eine Temperatur erhitzt, die um etwa 7°C unterhalb der Schmelztemperatur des Werkstoffs liegt, den warmen Rohling in die offene Form einführt, die Form verschließt und den Werkstoff in der geschlossenen Form unter einen bestimmten Dauerdruck setzt, diesen bestimmten Druck während einer Dauer aufrechterhält, die zwischen 1 s und 60 s nach dem Schließen der Form liegt, und man die Form öffnet und das geschmiedete Teil entnimmt, dadurch gekennzeichnet, daß der bestimmte Dauerdruck zwischen dem Dreifachen und Zwanzigfachen der Fließspannung des Werkstoffs, gemessen bei Zugbeanspruchung bei Umgebungstemperatur, liegt.

2. Herstellungsverfahren durch Schmieden in einer geschlossenen Form von Teilen vorgegebener Endausführung, ausgehend von einem Rohling aus halbkristallinem Kunstoff des Polyoxymethylen- und Polyamid-Typs, gemäß welchem man den Rohling auf homogene Weise auf eine Temperatur erhitzt, die höchstens gleich einem Wert ist, der um ungefähr 7°C unter dem Schmelzpunkt des Werkstoffs liegt, den warmen Rohling in die offene Form einführt, die Form schließt und den Werkstoff in der geschlossenen Form unter einen bestimmten Dauerdruck setzt, diesen bestimmten Dauerdruck während einer Zeitdauer aufrechterhält, die zwischen 1 s und 60 s nach dem Schließen der Form liegt, die Form öffnet und das geschmiedete Teil entnimmt, gekennzeichnet durch folgende Kombinationsmerkmale:
– die Erhitzungstemperatur des Rohlings liegt zwischen einem Wert, der ungefähr 50°C unter der Schmelztemperatur des Werkstoffs und dem genannten Wert liegt, der um etwa 7°C unterhalb der Schmelztemperatur liegt,
– der bestimmte Dauerdruck liegt zwischen dem Dreifachen und dem Zwanzigfachen der Fließspannung des Werkstoffs, gemessen bei Zugbelastung bei Umgebungstemperatur.

3. Verfahren nach einem der Ansprüche 1 und 2, dadurch gekennzeichnet, daß der Dauerdruck zwischen dem 10- bis 20-fachen der Fließspannung, gemessen bei Zugbeanspruchung bei Umgebungstemperatur, liegt, und daß er während einer Dauer von 1 bis 20 s ausgeübt wird.

4. Verfahren nach einem der Ansprüche 1 und 2, dadurch gekennzeichnet, daß man die Form schließt und den Werkstoff auf dem gewünschten Druck mit einer Geschwindigkeit zusammendrückt, die zwischen 5 cm/min und 2m/min liegt, und vorzugsweise zwischen 5 cm/min und 1 m/min.

5. Verfahren nach Anspruch 4, dadurch gekennzeichnet, daß man die Form schließt und den Werkstoff bei einem konstanten Wert der gewählten Geschwindigkeit zusammendrückt.

6. Verfahren nach einem der Ansprüche 1 und 2, dadurch gekennzeichnet, daß man für Teile komplexer Endausführung die Form auf eine Temperatur erhitzt, die zwischen 20°C und der Temperatur des erhitzten Rohlings liegt, bevor man diesen in die Form eingibt.

7. Verfahren nach Anspruch 6, dadurch gekennzeichnet, daß man die Form auf eine Temperatur erhitzt, die zwischen 100°C und der Temperatur des erhitzten Rohlings liegt.

8. Verfahren nach einem der Ansprüche 6 und 7, dadurch gekennzeichnet, daß man während der Dauer des Schmiedevorgangs die Form auf der Temperatur hält, auf welche sie erhitzt worden ist.

9. Verfahren nach Anspruch 8, dadurch gekennzeichnet, daß man die Form auf eine Temperatur erhitzt, die zwischen der Temperatur des Rohlings und der Temperatur des Rohlings minus 5°C liegt, und daß man die Form während der Dauer des Schmiedens auf dieser Temperatur hält.

10. Verfahren nach einem der Ansrpüche 1 und 2, dadurch gekennzeichnet, daß man für die Polyoxymethylene, die Homopolymere und Copolymere bei einem Druck zwischen 1.000 und 7.000 bar verwendet und für die Polyamide 6 und 66 einen Druck zwischen 600 und 5.000 bar.

EP 0 196 951 B1

Fig:1

Fig:7

Fig:2

Fig:3

Fig:4

Fig:5

Fig:6